# EUROPEAN PATENT SPECIFICATION

(11) **EP 4 489 199 B1**
(45) Date of publication and mention of the grant of the patent: **06.05.2026**
(21) Application number: 23873215.0
(22) Date of filing: 27.09.2023
(51) Int. Cl.: H01M 50/244, H01M 50/291, H01M 50/204, H01M 50/209, H01M 50/264, H01M 50/211, H01M 50/262, H01M 50/224

(54) **BATTERY PACK**
BATTERIEPACK
BLOC-BATTERIE

(30) Priority: 30.09.2022 KR 20220124949
(43) Date of publication of application: 08.01.2025
(73) Proprietor: LG Energy Solution, Ltd., Seoul 07335 (KR)
(72) Inventor: HUR, Nam Hoon, Daejeon 34122 (KR); SHIN, Ju Hwan, Daejeon 34122 (KR); JEON, Jong Pil, Daejeon 34122 (KR); KIM, Min Bum, Daejeon 34122 (KR); LEE, Hyoung Suk, Daejeon 34122 (KR)
(74) Representative: Plasseraud IP
(86) International application number: PCT/KR2023/015047
(87) International publication number: WO 2024/072106

(56) References cited:
- EP-A1- 4 016 662
- CN-A- 113 972 429
- CN-U- 205 211 819
- JP-A- 2021 039 945
- JP-B2- 4 399 675
- JP-B2- 4 399 675
- KR-A- 20220 014 027
- US-A1- 2012 135 300
- US-A1- 2021 066 686

## Description

### [Technical Field]

The present invention relates to a battery pack. More specifically, the present invention relates to a battery pack that accommodates a battery module with a reinforcement plate on both sides supporting each side, wherein the battery pack of the present invention is characterized by improved space efficiency by creating a separate weld bead space generated during welding to fix the battery module.

This application claims the benefit of priority based on Korean Patent Application No. 10-2022-0124949, filed on September 30, 2022.

### [Background Art]

Types of secondary batteries include lithium-ion batteries, lithium polymer batteries, nickel-cadmium batteries, nickel-hydrogen batteries, and nickel-zinc batteries. These unit secondary battery cells, i.e., unit battery cells, have an operating voltage of approximately 2.5 to 4.2 V. Therefore, if a higher output voltage is required, a plurality of battery cells may be connected in series to form a battery pack. Also, depending on the charge and discharge capacity required for the battery pack, a plurality of battery cells may be connected in parallel to form a battery pack. Thus, the number of battery cells included in the battery pack may be varied depending on the required output voltage or charge/discharge capacity.

For example, when configuring a battery pack by connecting a plurality of battery cells in series/parallel, a battery module consisting of a plurality of battery cells is first configured.

Typically, a battery module includes a plurality of battery cells, and depending on the need, the battery module may be protected by a module frame enclosing the cells, or by a reinforcement plate or the like supporting both sides.

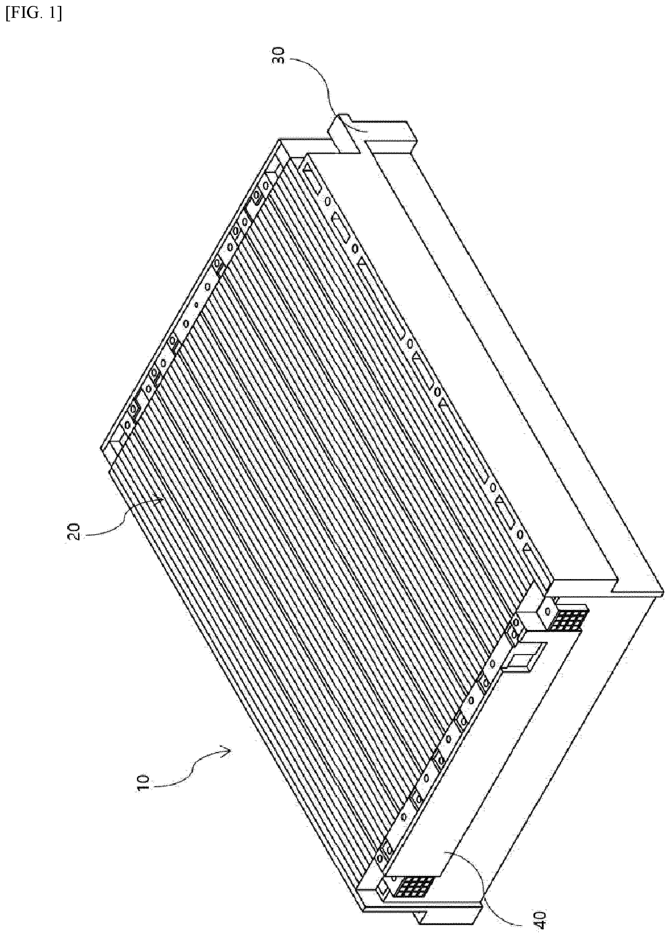

FIG. 1 illustrates one type of battery module 10 supported on both sides by a reinforcement plate 30. According to FIG. 1, the battery module 10 includes a cell stack 20 in which a plurality of cells is unidirectionally stacked, and end plates 40 are coupled to the front and rear of the cell stack 20 respectively. There is also a reinforcement plate 30 coupled to both sides to protect the cell stack 20. At this time, the reinforcement plate 30 may form a step along the up and down directions to facilitate coupling with neighboring battery modules 10.

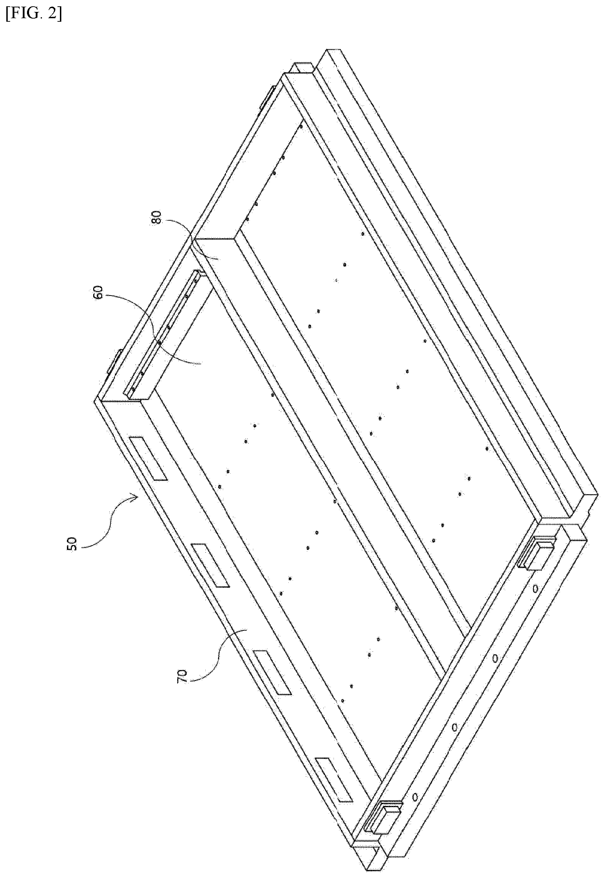

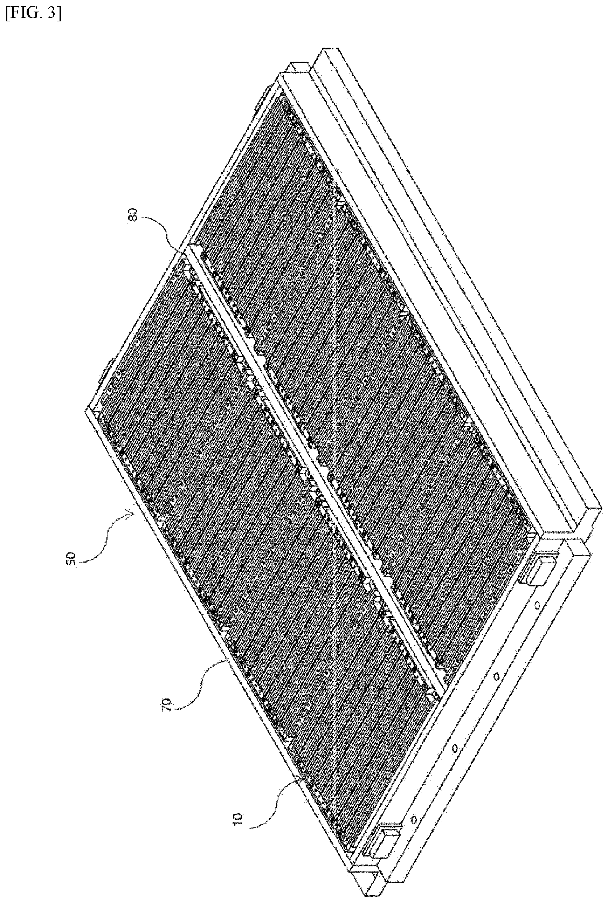

FIG. 2 illustrates a pack case 50 of a battery pack in which the battery module 10 shown in FIG. 1 may be accommodated, and FIG. 3 illustrates the battery module 10 of FIG. 1 accommodated in the pack case 50 of FIG. 2.

Referring to FIG. 2, the pack case 50 includes a base plate 60 supporting a lower part of the battery module 10 and side walls 70 coupled along a perimeter of the base plate 60. A portion of the side wall 70 may be provided with a support wall 90 against which the reinforcement plate 30 of the battery module 10 may be seated or coupled. It also includes a main separation wall 80 that runs across its center and is coupled to the base plate 60. The battery module 10 may be seated on and be accommodated in the space compartmentalized by the side walls 70 and main separation wall 80, as shown in FIG. 3.

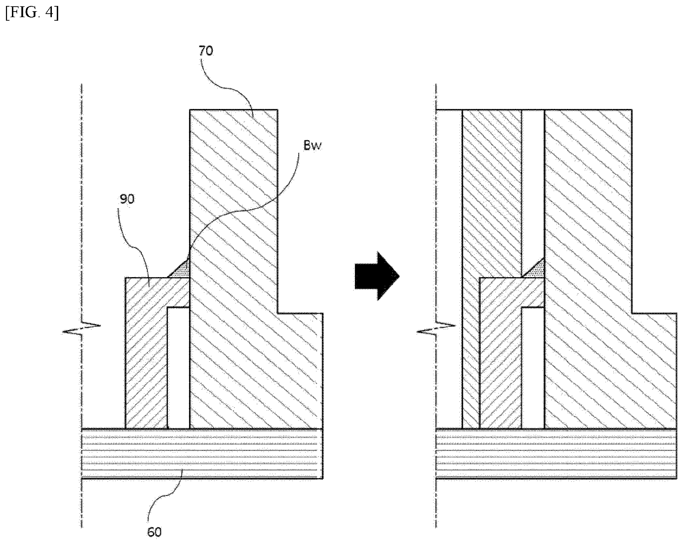

FIG. 4(a) is a cross-sectional view of the support wall 90 and side walls 70 in the pack case 50 of FIG. 2, and FIG. 4(b) illustrates a state in which the reinforcement plate 30 and support wall 90 are coupled by seating the battery module 10 of FIG. 4(a).

The support wall 90 has a height corresponding to the height of the stepped part of the battery module 10 so as to be coupled to the reinforcement plate 30 of the battery module 10 in which a step is formed. The support wall 90 is coupled by welding so as to be fixed to the inner side wall 70 of the pack case 50, wherein the support wall 90 includes a joint part 100 projecting forwardly from the top to provide a welding site. The welding may proceed on the joint part 100 as shown, and the welding may produce a weld bead Bw across the upper part of the joint part 100 and the side walls 70.

The support wall 90 is coupled to the side walls 70 by welding, as shown in FIG. 4, and the battery module 10 is seated to the base plate 60 by positioning so that a portion of the reinforcement plate 30 is coupled the support wall 90 fixed to the side walls 70, as shown in FIG. 4.

However, conventional battery packs have the disadvantage of not being able to utilize the space occupied by the joint part 100 for welding the support wall 90 to the side wall 70 as described above. Example of the background art can be found in US 2020/066686 A1.

### [Disclosure]

### [Technical Problem]

Accordingly, the present invention is directed to solving the above problems, and aims to provide a battery pack with improved internal space utilization.

Other objects and advantages of the present invention will be understood from the following description, and will become apparent from the embodiments of the present invention. It will also be readily apparent that the objects and advantages of the present invention may be realized by the means and combinations thereof disclosed in the claims of the patent.

### [Technical Solution]

According to the present invention, a battery pack accommodating battery modules is provided, which includes: a pack case including a module area where the battery module is seated, wherein the pack case includes: a base plate; a side wall coupled along the perimeter of the base plate; and a support wall coupled to an inner surface of the side wall, wherein the support wall includes a coupling part protruding in a ribbed shape on one side opposite the side wall, and the side wall includes an insertion groove recessed for insertion of a coupling part of the support wall on the inside.

According to the present invention, the support wall is coupled to the side wall by the coupling part being inserted into the insertion groove, and the coupling part and insertion groove are fixed to each other by welding.

The side wall may include: a front frame including terminals for the battery pack; a rear frame disposed opposite the front frame; and a pair of side frames coupled to ends of the front frame and rear frame, respectively, on each side of the base plate, wherein the support wall may be coupled to at least one of the front frame and rear frame.

The insertion groove is formed extending along a longitudinal direction of the front frame or rear frame, and the coupling part of the support wall coupled to the insertion groove may be formed extending along a longitudinal direction of the support wall corresponding to the insertion groove.

The battery module includes a cell stack having a plurality of cells stacked thereon, and a pair of reinforcement plates coupled to support both side surfaces located at outermost part in the cell stack, wherein the battery module accommodated in the pack case to abut the front frame or the rear frame may be fixed to the pack case by at least one of the reinforcement plates coupled to the support wall.

The battery module may be fixed to the pack case by bolts passing through the coupled support wall and reinforcement plate and screwed to the base plate.

The reinforcement plate included in the battery module includes a protrusion part at the upper part that protrudes to form a step along the height direction of the battery module, wherein the height of the support wall may be less than the lower end height of the protrusion part included in the reinforcement plate coupled to the support wall.

The reinforcement plate included in the battery module includes a protrusion part that protrudes to form a step along the height direction of the battery module, wherein the battery module may be coupled to the support wall by being positioned so that the lower part of the protrusion part of the reinforcement is on the upper end of the support wall.

The insertion groove includes an inwardly inclined surface at the upper part, the coupling part of the support wall fits into a space excluding the inclined surface of the insertion groove, and weld beads produced by welding may be filled between the coupling part and the inclined surface.

The height of the support wall is less than the height of the side wall, and the coupling part may be formed at an upper corner part of the support wall.
The side wall includes an inwardly inclined surface at the lower corner part where it couples to the base plate, and an auxiliary groove formed by the inclined surface, wherein the lower end of the support wall, the lower end of the side wall, and the base plate may be fixed to each other by welding in the auxiliary grooves.

The auxiliary grooves may be filled with weld beads produced by welding.

The insertion groove includes inwardly inclined surface at the upper and lower parts, respectively, the coupling part of the support wall fits into a region excluding the inclined surface of the insertion groove, and weld beads produced by welding may be filled between the coupling part and the inclined surface.

### [Advantageous Effects]

According to the present invention, the energy efficiency of the battery can be improved by improving the utilization of space inside the battery pack.

### [Brief Description of the Drawings]

FIG. 1 illustrates a conventional battery module.
FIG. 2 illustrates a pack case included in a conventional battery pack.
FIG. 3 illustrates a battery module accommodated in the pack case of FIG. 2.
FIG. 4 is a cross-sectional view of a portion of a side wall included in the pack case of FIGS. 2 and 3.
FIG. 5 is a perspective view of a pack case included in a battery pack according to a first embodiment of the present invention.
FIG. 6 is a cross-sectional view of a base plate and a side wall including an insertion groove at an end of the base plate.
FIG. 7 illustrates a portion of a cross-sectional view of a support wall and side wall.
FIG. 8 illustrates a battery module of the present invention.
FIG. 9 illustrates the battery module being seated adjacent to the side wall where the support wall is coupled.
FIG. 10 is a coupling cross-section of a side wall, support wall, and reinforcement plate to show the support wall and reinforcement plate coupling.
FIG. 11 illustrates the process of coupling a support wall and reinforcement plate to a side wall included in a battery pack according to a second embodiment of the present invention.
FIG. 12 illustrates the process of coupling a support wall and reinforcement plate to a side wall included in a battery pack according to a third embodiment of the present invention.

### [Detailed Description of the Preferred Embodiments]

Hereinafter, preferred embodiments of the present invention will be described in detail with reference to the accompanying drawings. Before doing so, it should be noted that the terms and words used in this specification and claims are not to be construed in their ordinary or dictionary sense, but rather in a sense and concept consistent with the technical idea of the present invention, based on the principle that the inventor may properly define the concept of a term to best describe his invention.

Accordingly, it is to be understood that the embodiments described herein and the configurations illustrated in the drawings are only the most preferred embodiments of the present invention and do not represent all of the technical ideas of the present invention, and that there may be various equivalents and variations that may be substituted for them at the time of filing the application.

In addition, in describing the present invention, detailed descriptions of related known configurations or features are omitted where it is determined that such detailed descriptions would obscure the essence of the present invention.

The embodiments of the present invention are provided to illustrate the invention more fully to those of ordinary skill in the art, and the shapes and sizes of the components in the drawings may be exaggerated, omitted, or shown schematically for clarity. Therefore, the size or proportions of each component are not necessarily indicative of its actual size or proportions.

The invention relates to a battery pack for accommodating a battery module M. More specifically, the present invention relates to a battery pack for accommodating a battery module M with a reinforcement plate Pr applied on each side for supporting the sides, wherein the battery pack of the present invention is characterized by improved space efficiency by creating a separate space for the weld bead Bw generated during welding to fix the battery module M.

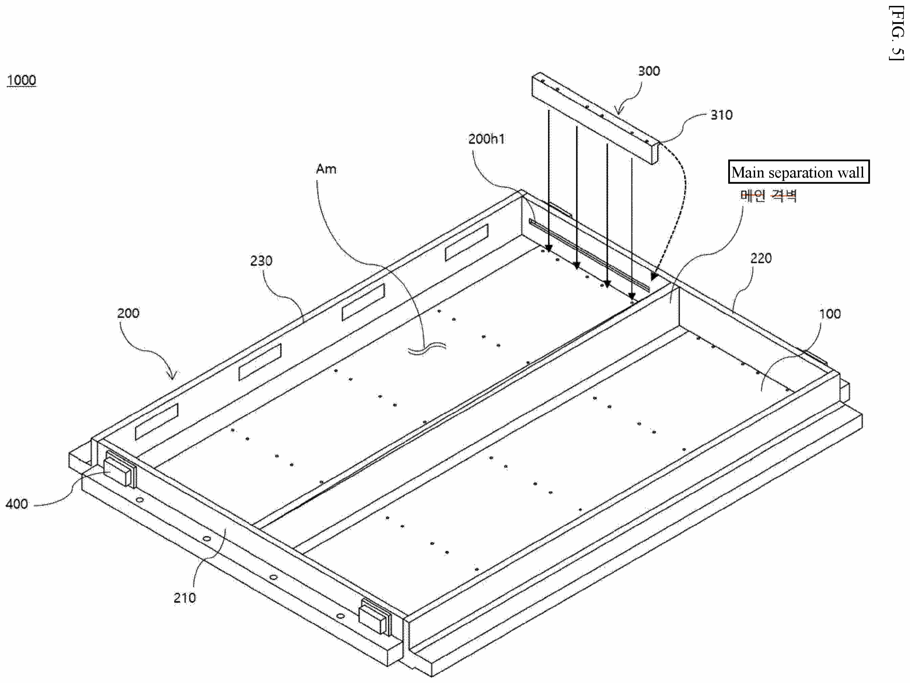

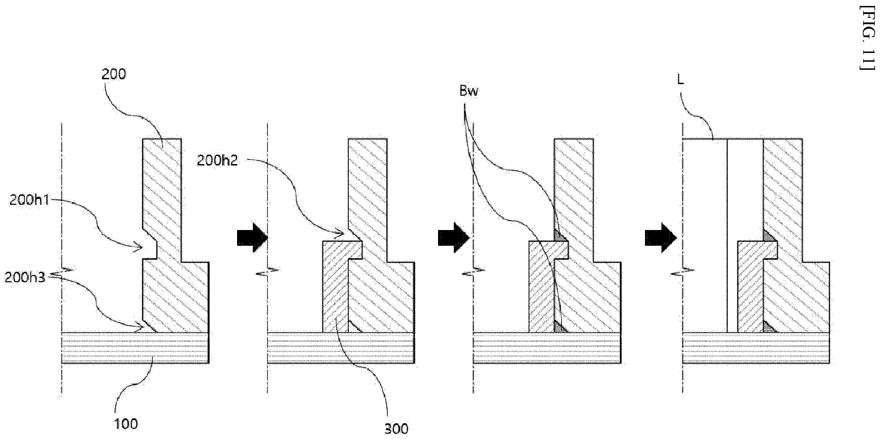

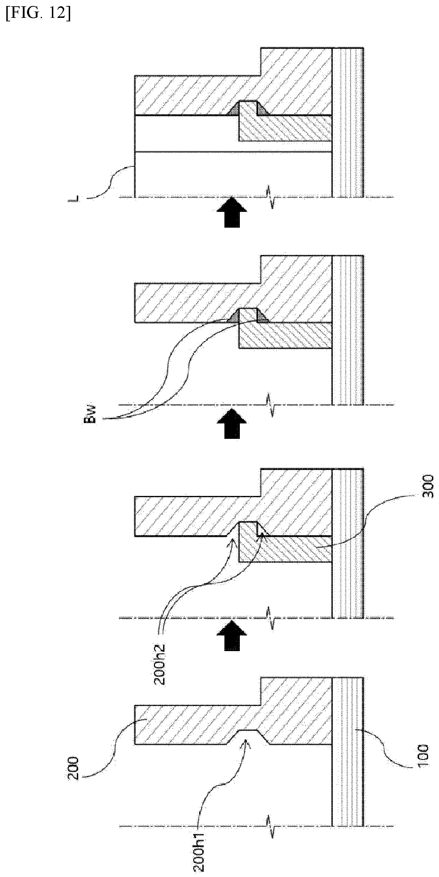

FIGS. 5 through 10 illustrate a battery pack according to a first embodiment of the invention, FIG. 11 illustrates a battery pack according to a second embodiment of the invention, and FIG. 12 illustrates a battery pack according to a third embodiment of the invention.

Hereinafter, each embodiment of the battery pack of the present invention will be described with reference to the drawings.

### (First embodiment)

FIG. 5 is a perspective view of a pack case 1000 included in a battery pack according to a first embodiment of the present invention.

The pack case 1000 of the present invention includes a base plate 100, a side wall 200, and a support wall 300, as shown in FIG. 5.

The base plate 100 serves to support the lower part of the battery module M accommodated in the pack case 1000.

The side wall 200 serves to support side parts of the battery module M accommodated in the pack case 1000, and to protect the battery module M from the external environment.

The side wall 200 is coupled along the perimeter of the base plate 100.

When the side wall 200 is coupled to the base plate 100, a module area Am may be formed on the base plate 100 into which a plurality of battery modules M may be seated.

An outer surface of the side wall 200 may be provided with a terminal 400 electrically connected to a battery module M accommodated in the pack case 1000, and the battery pack may be electrically connected to an external device via the terminal 400.

The side wall 200 more specifically includes a front frame 210 including a terminal 400 of the battery pack, a rear frame 220 disposed opposite the front frame 210, and a pair of side frames 230 coupled to the ends of the front frame 210 and rear frame 220, respectively, on both sides of the base plate 100.

The pack case 1000 of the present invention may further include a main separation wall that crosses the center and coupled to the base plate 100.

The main separation wall may serve to protect wires and busbars and the like by inserting them therein, or may serve to compartmentalize the space inside the pack case 1000 into module areas Am.

The support wall 300 is coupled to an inner surface of the side wall 200.

The support wall 300 is coupled and fixed to the side wall 200 and base plate 100, and serves to support and fix the battery module M of the present invention.

The side wall 200 and support wall 300 and the like included in the pack case 1000 may be made of aluminum or the like, and the support wall 300 is coupled to the side wall 200 by welding or the like.

The support wall 300 of the present invention includes a coupling part 310 protruding in a ribbed shape on one side opposite the side wall 200.

The coupling part 310 is formed extending along the longitudinal direction of the support wall 300, and preferably protruding from the upper end of the support wall 300. More specifically, the coupling part 310 is formed at an upper corner of the support wall 300 and protrudes forwardly therefrom.

The side wall 200 includes an insertion groove 200h1 recessed inwardly so that the coupling part 310 of the support wall 300 may be inserted, as shown in FIG. 5.

That is, the support wall 300 is coupled to the side wall 200 by allowing the protruding coupling part 310 to be inserted into the insertion groove 200h1 of the side wall 200.

Specifically, the insertion groove 200h1 is formed in at least one of the front frame 210 and the rear frame 220 as shown in FIG. 5, and extends along a longitudinal direction of the front frame 210 or rear frame 220.

The coupling part 310 of the support wall 300, which is coupled to the insertion groove 200h1, is formed to extend along the longitudinal direction of the support wall 300 corresponding to the insertion groove 200h1.

The support wall 300 of the present invention is coupled and fixed to the side wall 200 by welding the coupling part 310 and insertion groove 200h1 to each other.

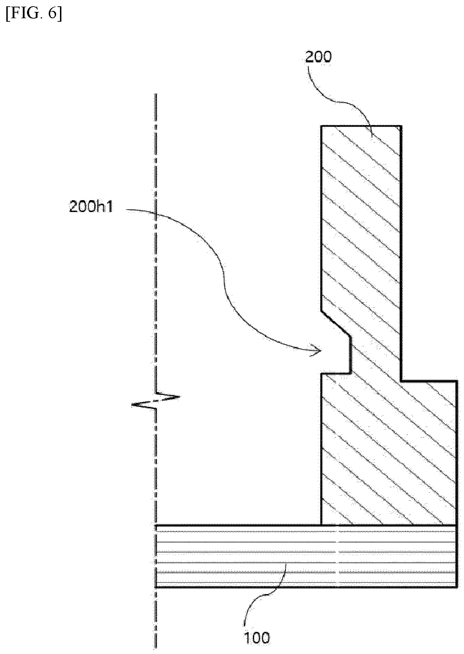

FIG. 6 is a cross-sectional view of a base plate 100 and a side wall 200 including an insertion groove 200h1 at an end of the base plate 100.

As shown in FIG. 6, the insertion groove 200h1 includes an inclined surface sloping inwardly at the upper part. Thus, when the insertion groove 200h1 is observed in cross-section, it becomes a trapezoidal shape including an inclined surface on one side.

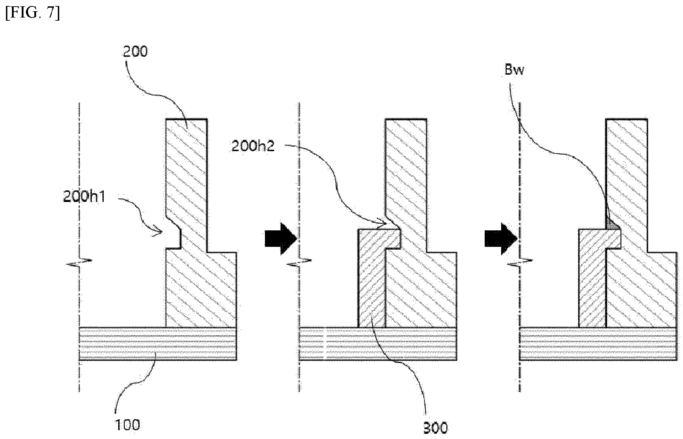

FIG. 7 is a portion of a cross-section of the support wall 300 and side wall 200 that are coupled to each other.

Referring to FIG. 7, an insertion groove 200h1 is formed on the inner surface of the side wall 200 coupled to the end of the base plate 100, and the support wall 300 is positioned so that the coupling part 310 faces the insertion groove 200h1, and is coupled to the side wall 200 so that the coupling part 310 is inserted into the insertion groove 200h1. At this time, the coupling part 310 is fitted into a space excluding the inclined surface of the insertion groove 200h1, and between the coupling part 310 and the inclined surface, an empty space having a triangular cross-section, that is, a weld groove 200h2, is formed. Then, the coupling part 310 of the support wall 300 and the insertion groove 200h1 of the side wall 200 are welded through the empty space, and the weld bead Bw generated by the welding may be filled into the weld groove 200h2.

Thus, due to the weld groove 200h2, the support wall 300 can be tightly coupled to the side wall 200 while still being securely fixed by welding.

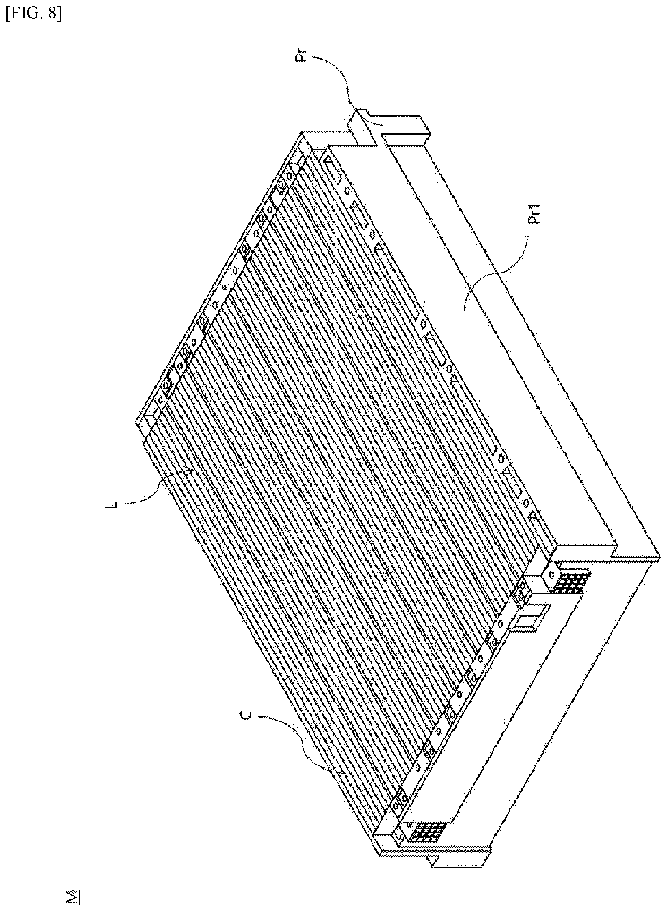

FIG. 8 illustrates a battery module M of the present invention.

The battery module M includes a cell stack L having a plurality of cells C stacked in a unidirectional manner, and a pair of reinforcement plates Pr coupled to support both sides located at outermost part in the cell stack L, as shown in FIG. 8.

The reinforcement plate Pr includes protrusion part Pr1 protruding to form a step along the height direction of the battery module M. Specifically, the reinforcement plate Pr on one side of the battery module M includes the reinforcement part Pr1 on the upper part, and the reinforcement plate Pr on the other side includes the protrusion part Pr1 on the lower part. Thus, a pair of neighboring battery modules M can be coupled to each other by the interlocking shaped reinforcement plates Pr.

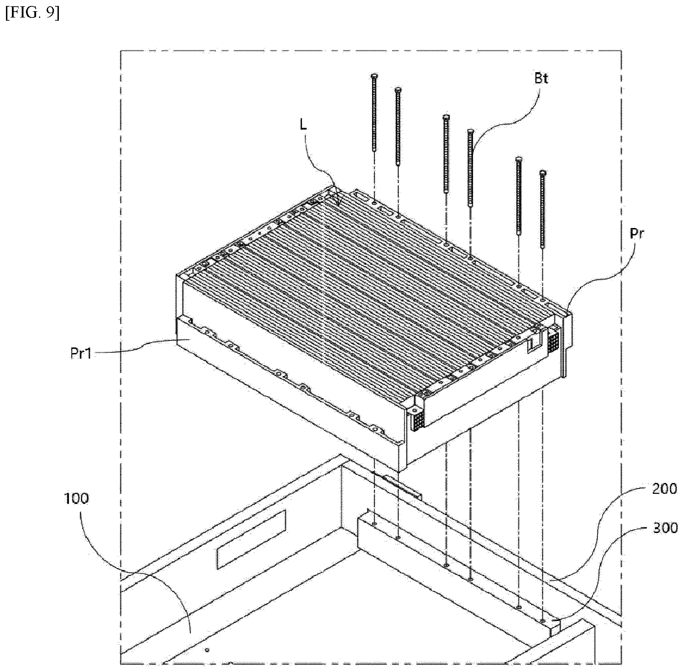

FIG. 9 illustrates the battery module M being seated so that the support wall 300 is adjacent to the coupled side wall 200.

The battery module M is seated on the base plate 100 in close contact with the support wall 300 by one side of the protrusion part Pr1, located on the upper part of the reinforcement plate Pr included on both sides, facing the support wall 300, as shown in FIG. 9.

The height of the support wall 300 is lower than the height of the side wall 200, as shown in FIG. 9. More specifically, the support wall 300 is preferably lower than the height of the lower end of the protrusion part Pr1 of the reinforcing plate Pr in order to support and couple the lower part of the protrusion part Pr1 located on the upper part of the reinforcement plate Pr. Thus, the battery module M is positioned so that the lower part of the protrusion part Pr1 of the reinforcement plate Pr rests on the upper end of the support wall 300, and it is coupled to the support wall 300.

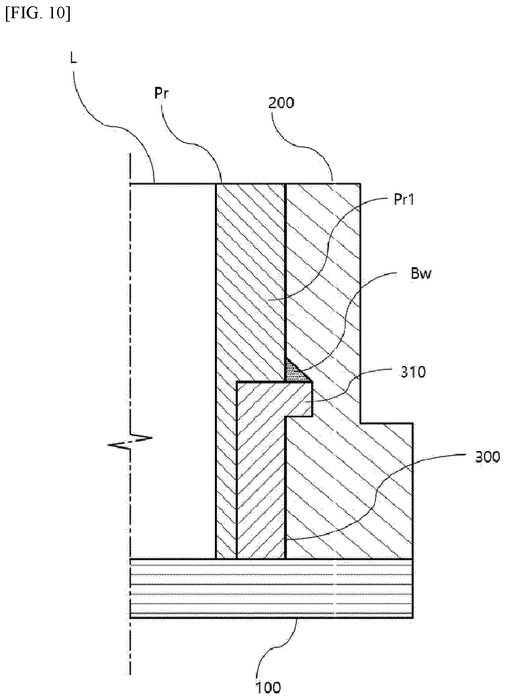

FIG. 10 is a coupling cross-section of the side wall 200, the support wall 300, and the reinforcement plate Pr to show the coupling of the support wall 300 and the reinforcement plate Pr.

Referring to FIG. 10, the reinforcement plate Pr is coupled to the support wall 300 and the side wall 200 such that the protrusion part Pr1 contacts the inside of the side wall 200, and that the protrusion part Pr1 is supported on the upper part of the support wall 300.

The battery module M coupled to the support wall 300 may be fixed to the pack case 1000 by bolts Bt. That is, the battery module M may be fixed to the pack case 1000 by bolts Bt that penetrate the support wall 300 and reinforcement plate Pr and are screwed to the base plate 100 as shown in FIG. 9. In this case, since the weld bead Bw is filled in the weld groove 200h2 of the side wall 200, it is possible for the reinforcement plate Pr to be closely coupled to the side wall 200 and the support wall 300, and thus has the effect of not wasting space inside the pack case 1000.

The battery pack of the present invention may further include an upper cover that is coupled to the pack case 1000 to cover the upper part of each battery module M accommodated in the pack case 1000. However, as the upper cover is known in the art and does not constitute a major feature of the present invention, a detailed description thereof will be omitted.

### (Second embodiment)

The support wall 300 of the present invention is not only coupled to the side wall 200 by welding of the coupling part 310 and insertion groove 200h1, but may also be welded to the base plate 100.

FIG. 11 illustrates the process of coupling a support wall 300 and a reinforcement plate Pr to a side wall 200 included in a battery pack according to a second embodiment of the present invention.

The side wall 200 according to a second embodiment is characterized in that it includes an inwardly inclined surface at the lower corner part where it couples to the base plate 100, and an auxiliary groove 200h3 formed by the inclined surface.

The auxiliary groove 200h3 has a triangular shape in cross-section, and welding may proceed into the auxiliary groove 200h3 space. That is, the lower end of the support wall 300, the lower end of the side wall 200, and the base plate 100 may be fixed to each other by welding in the auxiliary groove 200h3.

The weld bead Bw generated by the welding is filled only in the auxiliary groove 200h3 space so as not to interfere with the support wall 300 being closely adhering to the side wall 200.

### (Third embodiment)

In the present invention, the welding at the coupling part 310 and the insertion groove 200h1 can take place over a larger area.

FIG. 12 illustrates the process of coupling a support wall 300 and a reinforcement plate Pr to a side wall 200 included in a battery pack according to a third embodiment of the present invention.

The side wall 200 according to the third embodiment is characterized in that it includes inwardly inclined surface at the upper and lower parts of the insertion groove 200h1 respectively.

The coupling part 310 of the support wall 300 is fitted in a region excluding the inclined surface of the insertion groove 200h1, as shown in FIG. 12. By fitting the coupling part 310 into the insertion groove 200h1, an auxiliary groove 200h3 is formed through the inclined surface at the upper and lower parts of the coupling part 310.

The auxiliary groove 200h3 has a triangular shape in cross-section, and welding can proceed into the space of each of the auxiliary grooves 200h3. That is, the support wall 300 can be welded to the side wall 200 through a wider space, and the support wall 300 can be fixed to the side wall 200 more stably.

The weld bead Bw generated by the welding is filled only in the spaces of the auxiliary grooves 200h3 located at the upper and lower parts of the coupling part 310 so as not to interfere with the support wall 300 being closely adhering to the side wall 200.

The present invention has been described in more detail above with reference to the drawings and embodiments.

### [Reference numerals]

10: (CONVENTIONAL ART) BATTERY MODULE
20: (CONVENTIONAL ART) CELL STACK
30: (CONVENTIONAL ART) REINFORCEMENT PLATE
40: (CONVENTIONAL ART) END PLATE
50: (CONVENTIONAL ART) PACK CASE
60: (CONVENTIONAL ART) BASE PLATE
70: (CONVENTIONAL ART) SIDE WALL
80: (CONVENTIONAL ART) MAIN SEPARATION WALL
90: (CONVENTIONAL ART) SUPPORT WALL
100: (CONVENTIONAL ART) JOINT PART
1000: PACK CASE
100: BASE PLATE
200: SIDE WALL
200h1: INSERTION GROOVE
200h2: WELD GROOVE
200h3: AUXILIARY GROOVE
210: FRONT FRAME
220: REAR FRAME
230: SIDE FRAME
300: SUPPORT WALL
310: COUPLING PART
400: TERMINAL
Am: MODULE AREA
Bt: BOLT
Bw: WELD BEAD
C: CELL
L: CELL STACK
M: BATTERY MODULE
Pr: REINFORCEMENT PLATE
Pr1: PROTRUSION PAR

## Claims

1. A battery pack accommodating a battery module (M), comprising:
a pack case (1000) including a module area (Am) where the battery module (M) is seated, wherein
the pack case (1000) comprises:
a base plate (100);
a side wall (200) coupled along the perimeter of the base plate (100); and
a support wall (300) coupled to an inner surface of the side wall (200), wherein
the support wall (300) includes a coupling part (310) protruding in a ribbed shape on one side opposite the side wall (200), **characterized in that**
the side wall (200) includes an insertion groove (200h1) recessed for insertion of the coupling part (310) of the support wall (300) on the inside,
the support wall (300) is coupled to the side wall (200) by the coupling part (310) being inserted into the insertion groove (200h1), and
the coupling part (310) and insertion groove (200h1) are fixed to each other by welding.

2. The battery pack of claim 1, wherein
the side wall (200) comprises:
a front frame (210) including terminals for the battery pack;
a rear frame (220) disposed opposite the front frame (210); and
a pair of side frames (230) coupled to ends of the front frame (210) and rear frame (220), respectively, on each side of the base plate (100), wherein
the support wall (300) is coupled to at least one of the front frame (210) and rear frame (220).

3. The battery pack of claim 2, wherein
the insertion groove (200h1) is formed extending along a longitudinal direction of the front frame (210) or rear frame (220), and
the coupling part (310) of the support wall (300) coupled to the insertion groove (200h1) is formed extending along a longitudinal direction of the support wall (300) corresponding to the insertion groove (200h1).

4. The battery pack of claim 2, wherein
the battery module (M) includes a cell stack (L) having a plurality of cells (C) stacked thereon, and a pair of reinforcement plates (Pr) coupled to support both side surfaces located at outermost part in the cell stack (L), wherein
the battery module (M) accommodated in the pack case (1000) to abut the front frame (210) or the rear frame (220) is fixed to the pack case (1000) by at least one of the reinforcement plates (Pr) coupled to the support wall (300).

5. The battery pack of claim 4, wherein
the battery module (M) is fixed to the pack case (1000) by bolts (Bt) passing through the coupled support wall (300) and reinforcement plate (Pr) and screwed to the base plate (100).

6. The battery pack of claim 4, wherein
the reinforcement plate (Pr) included in the battery module (M) includes a protrusion part (Pr1) at the upper part that protrudes to form a step along the height direction of the battery module (M), wherein
the height of the support wall (300) is less than the lower end height of the protrusion part (Pr1) included in the reinforcement plate (Pr) coupled to the support wall (300).

7. The battery pack of claim 4, wherein
the reinforcement plate (Pr) included in the battery module (M) includes a protrusion part (Pr1) that protrudes to form a step along the height direction of the battery module, wherein
the battery module (M) is coupled to the support wall (300) by being positioned so that the lower part of the protrusion part (Pr1) of the reinforcement plate (Pr) is on the upper end of the support wall (300).

8. The battery pack of claim 1, wherein
the insertion groove (200h1) includes an inwardly inclined surface at the upper part,
the coupling part (310) of the support wall (300) fits into a space excluding the inclined surface of the insertion groove (200h1), and
weld beads (Bw) produced by welding is filled between the coupling part (310) and the inclined surface.

9. The battery pack of claim 1, wherein
the height of the support wall (300) is less than the height of the side wall (200), and
the coupling part (310) is formed at an upper corner part of the support wall (300).

10. The battery pack of claim 1, wherein
the side wall (200) includes an inwardly inclined surface at the lower corner part where it couples to the base plate (100), and
an auxiliary groove (200h3) formed by the inclined surface, wherein
the lower end of the support wall (300), the lower end of the side wall (200), and the base plate (100) are fixed to each other by welding in the auxiliary grooves (200h3).

11. The battery pack of claim 10, wherein
the auxiliary grooves (200h3) are filled with weld beads (Bw) produced by welding.

12. The battery pack of claim 1, wherein
the insertion groove (200h1) includes inwardly inclined surface at the upper and lower parts, respectively,
the coupling part (310) of the support wall (300) fits into a region excluding the inclined surface of the insertion groove (200h1), and
weld beads (Bw) produced by welding is filled between the coupling part (310) and the inclined surface.

## Patentansprüche

1. Batteriepack, welcher ein Batteriemodul (M) aufnimmt, umfassend:
ein Packgehäuse (1000), welches einen Modulbereich (Am) umfasst, in welchem das Batteriemodul (M) sitzt, wobei
das Packgehäuse (1000) umfasst:
eine Basisplatte (100);
eine Seitenwand (200), welche entlang des Umfangs der Basisplatte (100) gekoppelt ist; und
eine Trägerwand (300), welche mit einer inneren Fläche der Seitenwand (200) gekoppelt ist, wobei
die Trägerwand (300) einen Kopplungsteil (310) umfasst, welcher in einer gerippten Form an einer Seite entgegengesetzt zu der Seitenwand (200) hervorsteht, **dadurch gekennzeichnet, dass**
die Seitenwand (200) eine Einführnut (200h1) umfasst, welche zum Einführen des Kopplungsteils (310) der Trägerwand (300) an der Innenseite vertieft ist,
wobei die Trägerwand (300) mit der Seitenwand (200) durch den Kopplungsteil (310) gekoppelt ist, welcher in die Einführnut (200h1) eingeführt ist, und
wobei der Kopplungsteil (310) und die Einführnut (200h1) miteinander durch Schweißen fixiert sind.

2. Batteriepack nach Anspruch 1, wobei
die Seitenwand (200) umfasst:
einen vorderen Rahmen (210), welcher Anschlüsse für den Batteriepack umfasst;
einen hinteren Rahmen (220), welcher entgegengesetzt zu dem vorderen Rahmen (210) angeordnet ist; und
ein Paar von Seitenrahmen (230), welche an jeder Seite der Basisplatte (100) mit Enden des vorderen Rahmens (210) bzw. des hinteren Rahmens (220) gekoppelt sind, wobei
die Trägerwand (300) mit wenigstens einem aus dem vorderen Rahmen (210) und dem hinteren Rahmen (220) gekoppelt ist.

3. Batteriepack nach Anspruch 2, wobei
die Einführnut (200h1) gebildet ist, indem sie sich entlang einer longitudinalen Richtung des vorderen Rahmens (210) oder des hinteren Rahmens (220) erstreckt, und
der Kopplungsteil (310) der Trägerwand (300), welcher mit der Einführnut (200h1) gekoppelt ist, gebildet ist, indem er sich entlang einer longitudinalen Richtung der Trägerwand (300) erstreckt, welche der Einführnut (200h1) entspricht.

4. Batteriepack nach Anspruch 2, wobei
das Batteriemodul (M) einen Zellenstapel (L), welcher eine Mehrzahl von Zellen (C) umfasst, welche darin gestapelt sind, und ein Paar von Verstärkungsplatten (Pr) umfasst, welche gekoppelt sind, um beide Seitenflächen zu stützen, welche an einem äußersten Teil in dem Zellenstapel (L) angeordnet sind, wobei
das Batteriemodul (M), welches in dem Packgehäuse (1000) aufgenommen ist, um an dem vorderen Rahmen (210) oder dem hinteren Rahmen (220) anzuliegen, durch wenigstens eine der Verstärkungsplatten (Pr), welche mit der Trägerwand (300) gekoppelt sind, an dem Packgehäuse (1000) fixiert ist.

5. Batteriepack nach Anspruch 4, wobei
das Batteriemodul (M) durch Bolzen (Bt), welche durch die gekoppelte Trägerwand (300) sowie die Verstärkungsplatte (Pr) verlaufen und welche an die Basisplatte (100) geschraubt sind, am dem Packgehäuse (1000) fixiert ist.

6. Batteriepack nach Anspruch 4, wobei
die Verstärkungsplatte (Pr), welche in dem Batteriemodul (M) umfasst ist, einen Vorsprungsteil (Pr1) an dem oberen Teil umfasst, welcher hervorsteht, um entlang der Höhenrichtung des Batteriemoduls (M) eine Stufe zu bilden, wobei
die Höhe der Trägerwand (300) geringer als die Höhe des unteren Endes des Vorsprungsteils (Pr1) ist, welcher in der Verstärkungsplatte (Pr) umfasst ist, welche mit der Trägerwand (300) gekoppelt ist.

7. Batteriepack nach Anspruch 4, wobei
die Verstärkungsplatte (Pr), welche in dem Batteriemodul (M) umfasst ist, einen Vorsprungsteil (Pr) umfasst, welcher hervorsteht, um entlang der Höhenrichtung des Batteriemoduls eine Stufe zu bilden, wobei
das Batteriemodul (M) mit der Trägerwand (300) gekoppelt ist, indem es derart positioniert ist, dass der untere Teil des Vorsprungsteils (Pr1) der Verstärkungsplatte (Pr) an dem oberen Ende der Trägerwand (300) ist.

8. Batteriepack nach Anspruch 1, wobei
die Einführnut (200h1) an dem oberen Teil eine nach innen geneigte Fläche umfasst,
der Kopplungsteil (310) der Trägerwand (300) in einen Raum passt, welcher die geneigte Fläche der Einführnut (200h1) ausschließt, und
Schweißperlen (Bw), welche durch Schweißen erzeugt sind, zwischen den Kopplungsteil (310) und die geneigte Fläche gefüllt sind.

9. Batteriepack nach Anspruch 1, wobei
die Höhe der Trägerwand (300) geringer als die Höhe der Seitenwand (200) ist, und
der Kopplungsteil (310) an einem oberen Eckteil der Trägerwand (300) gebildet ist.

10. Batteriepack nach Anspruch 1, wobei
die Seitenwand (200) an dem unteren Eckteil, an welchem sie mit der Basisplatte (100) koppelt, eine nach innen geneigte Fläche, und
eine Hilfsnut (200h3) umfasst, welche durch die geneigte Fläche gebildet ist, wobei
das untere Ende der Trägerwand (300), das untere Ende der Seitenwand (200) und die Basisplatte (100) durch Schweißen in den Hilfsnuten (200h3) miteinander verbunden sind.

11. Batteriepack nach Anspruch 10, wobei
die Hilfsnuten (200h3) mit Schweißperlen (Bw) gefüllt sind, welche durch Schweißen erzeugt sind.

12. Batteriepack nach Anspruch 1, wobei
die Einführnut (200h1) eine an den oberen bzw. unteren Teilen nach innen geneigte Fläche umfasst,
der Kopplungsteil (310) der Trägerwand (300) in einen Bereich passt, welcher die geneigte Fläche der Einführnut (200h1) ausschließt, und
Schweißperlen (Bw), welche durch Schweißen erzeugt sind, zwischen den Kopplungsteil (310) und die geneigte Fläche gefüllt sind.

## Revendications

1. Bloc-batterie contenant un module de batterie (M), comprenant :
un boîtier de bloc (1000) comportant une zone de module (Am) où le module de batterie (M) est installé, dans lequel
le boîtier de bloc (1000) comprend :
une plaque de base (100) ;
une paroi latérale (200) accouplée le long du périmètre de la plaque de base (100) ; et
une paroi de support (300) accouplée à une surface intérieure de la paroi latérale (200), dans lequel
la paroi de support (300) comporte une partie d'accouplement (310) faisant saillie avec une forme nervurée sur un côté opposé à la paroi latérale (200), **caractérisé en ce que** la paroi latérale (200) comporte une rainure d'insertion (200h1) en creux pour l'insertion à l'intérieur de la partie d'accouplement (310) de la paroi de support (300), la paroi de support (300) est accouplée à la paroi latérale (200) par la partie d'accouplement (310) qui est insérée dans la rainure d'insertion (200h1), et
la partie d'accouplement (310) et la rainure d'insertion (200h1) sont fixées l'une à l'autre par soudage.

2. Bloc-batterie selon la revendication 1, dans lequel
la paroi latérale (200) comprend :
un châssis avant (210) comportant des bornes pour le bloc-batterie ;
un châssis arrière (220) disposé à l'opposé du châssis avant (210) ; et
une paire de châssis latéraux (230) accouplés à des extrémités du châssis avant (210) et du châssis arrière (220), respectivement, de chaque côté de la plaque de base (100), dans lequel
la paroi de support (300) est accouplée à au moins un parmi le châssis avant (210) et le châssis arrière (220).

3. Bloc-batterie selon la revendication 2, dans lequel
la rainure d'insertion (200h1) est formée s'étendant le long d'une direction longitudinale du châssis avant (210) ou du châssis arrière (220), et
la partie d'accouplement (310) de la paroi de support (300) accouplée à la rainure d'insertion (200h1) est formée s'étendant le long d'une direction longitudinale de la paroi de support (300) correspondant à la rainure d'insertion (200h1).

4. Bloc-batterie selon la revendication 2, dans lequel
le module de batterie (M) comporte un empilement de cellules (L) ayant une pluralité de cellules (C) empilées, et une paire de plaques de renfort (Pr) accouplées pour supporter les deux surfaces latérales situées au niveau de la partie la plus extérieure dans l'empilement de cellules (L), dans lequel
le module de batterie (M) contenu dans le boîtier de bloc (1000) pour venir en butée sur le châssis avant (210) ou le châssis arrière (220) est fixé au boîtier de bloc (1000) par au moins des plaques de renfort (Pr) accouplées à la paroi de support (300).

5. Bloc-batterie selon la revendication 4, dans lequel
le module de batterie (M) est fixé au boîtier de bloc (1000) par des boulons (Bt) traversant la paroi de support (300) et la plaque de renfort (Pr) accouplées et vissés à la plaque de base (100).

6. Bloc-batterie selon la revendication 4, dans lequel
la plaque de renfort (Pr) comprise dans le module de batterie (M) comporte une partie en saillie (Pr1) au niveau de la partie supérieure qui fait saillie pour former une marche le long de la direction de hauteur du module de batterie (M), dans lequel
la hauteur de la paroi de support (300) est plus faible que la hauteur d'extrémité inférieure de la partie en saillie (Pr1) comprise dans la plaque de renfort (Pr) accouplée à la paroi de support (300).

7. Bloc-batterie selon la revendication 4, dans lequel
la plaque de renfort (Pr) comprise dans le module de batterie (M) comporte une partie en saillie (Pr1) qui fait saillie pour former une marche le long de la direction de hauteur du module de batterie, dans lequel
le module de batterie (M) est accouplé à la paroi de support (300) en étant positionné de sorte que la partie inférieure de la partie en saillie (Pr1) de la plaque de renfort (Pr) soit sur l'extrémité supérieure de la paroi de support (300).

8. Bloc-batterie selon la revendication 1, dans lequel
la rainure d'insertion (200h1) comporte une surface inclinée vers l'intérieur au niveau de la partie supérieure,
la partie d'accouplement (310) de la paroi de support (300) s'ajuste dans un espace excluant la surface inclinée de la rainure d'insertion (200h1), et
des cordons de soudure (Bw) produits par soudage sont introduits entre la partie d'accouplement (310) et la surface inclinée.

9. Bloc-batterie selon la revendication 1, dans lequel
la hauteur de la paroi de support (300) est plus faible que la hauteur de la paroi latérale (200), et
la partie d'accouplement (310) est formée au niveau d'une partie d'angle supérieure de la paroi de support (300).

10. Bloc-batterie selon la revendication 1, dans lequel
la paroi latérale (200) comporte une surface inclinée vers l'intérieur au niveau de la partie d'angle inférieure où elle est accouplée à la plaque de base (100), et
une rainure auxiliaire (200h3) est formée par la surface inclinée, dans lequel
l'extrémité inférieure de la paroi de support (300), l'extrémité inférieure de la paroi latérale (200) et la plaque de base (100) sont fixées les unes aux autres par soudage dans les rainures auxiliaires (200h3).

11. Bloc-batterie selon la revendication 10, dans lequel
les rainures auxiliaires (200h3) sont remplies de cordons de soudure (Bw) produits par soudage.

12. Bloc-batterie selon la revendication 1, dans lequel
la rainure d'insertion (200h1) comporte une surface inclinée vers l'intérieur au niveau des parties supérieure et inférieure, respectivement,
la partie d'accouplement (310) de la paroi de support (300) s'ajuste dans une région excluant la surface inclinée de la rainure d'insertion (200h1), et
des cordons de soudure (Bw) produites par soudage sont introduits entre la partie d'accouplement (310) et la surface inclinée.
